# EUROPÄISCHE PATENTSCHRIFT

(11) **EP 1 872 118 B1**
(45) Veröffentlichungstag und Bekanntmachung des Hinweises auf die Patenterteilung: **23.05.2012**
(21) Anmeldenummer: 06722785.0
(22) Anmeldetag: 06.04.2006
(51) Int. Cl.: G01N 29/04

(54) **Vorrichtung und Verfahren für die zerstörungsfreie thermographische Prüfung von Werkstücken**
Device and method for the non-destructive thermographic testing of workpieces
Procédé et dispositif pour effectuer un contrôle thermographique non destructif sur des pièces d'usinage

(30) Priorität: 08.04.2005 DE 102005017467
(43) Veröffentlichungstag der Anmeldung: 02.01.2008
(73) Patentinhaber: Fraunhofer-Gesellschaft zur Förderung der angewandten Forschung e.V., 80686 München (DE)
(72) Erfinder: KÖHLER, Bernd, 01259 Dresden (DE); HAUPT, Lothar, 01257 Dresden (DE)
(74) Vertreter: Pfenning, Meinig & Partner GbR
(86) Internationale Anmeldenummer: PCT/DE2006/000649
(87) Internationale Veröffentlichungsnummer: WO 2006/105783

(56) Entgegenhaltungen:
- WO-A-2004/020993
- US-A1- 2003 010 124
- US-A1- 2004 089 811
- ZWESCHPER TH ET AL: "Ultrasound excited thermography using frequency modulated elastic waves" INSIGHT NON DESTR TEST COND MONIT; INSIGHT: NON-DESTRUCTIVE TESTING AND CONDITION MONITORING MARCH 2003, Bd. 45, Nr. 3, März 2003 (2003-03), Seiten 178-182, XP002395169
- TSOI K; RAJIC N: "Effect of Sonic Thermographic Inspection on Fatigue Crack Growth in an Al Alloy", ANNOUNCEMENT AUSTRALIAN GOVERNMENT DEPARTMENT OF DEFENCE, vol. DSTO-TN-0584, 1 October 2004 (2004-10-01), pages 1-19,

## Beschreibung

Die Erfindung betrifft eine Vorrichtung und ein Verfahren für die zerstörungsfreie thermographische Prüfung von Werkstücken, mit der unterschiedliche Fehler und Defekte an Werkstücken, beispielsweise Risse, oder Delaminationen detektiert werden können.

Dabei ist es bisher üblich mittels so genannter Sonotroden Ultraschallwellen in zu prüfende Werkstücke einzukoppeln und dabei mit entsprechenden Detektoren am Werkstück Temperaturmessungen für eine Fehlerdiagnose durchgeführt. Dabei wirken hohe Kräfte über die Sonotroden auf das Werkstück, die Beschädigungen bis hin zur Zerstörung des Werkstückes hervor rufen können.

Dabei müssen ggf. und insbesondere bei großformatigen Werkstücken häufig eine große Anzahl von Messungen an unterschiedlichen Orten oder eine erhöhte Anzahl an Schwingungserzeugern eingesetzt werden.

Außerdem bereitet es Probleme einen ggf. an einem Werkstück vorhandenen Fehler bzw. eine Fehlstelle mit hinreichender Genauigkeit zu lokalisieren bzw. eine Aussage über die jeweilige Art des Fehlers zu treffen.

So ist aus US 2003/0010124 A1 eine technische Lösung bekannt, bei mit zwei Elementen Schallwellen im Ultraschallbereich in ein zu prüfendes Teil eingekoppelt werden und mit einer Infrarot-Kamera eine Prüfung vorgenommen wird.

Zwetscher, Th. et al beschreiben in "Ultrasound excited thermography using frequenzy modulated elastic wavers"; INSIGHT NON DESTR. TEST COND. MONIT.: NON-DESTRUCTIVE TESTING AND CONDITION MONITORING MARCH 2003; Bd. 45; Nr. 3; März 2003 (2003-03); Seiten 178-182; XP002395169 ebenfalls eine Möglichkeit, bei der frequenzmodulierte Ultraschallwellen in ein Bauteil eingekoppelt werden sollen, um eine stehende Welle darin auszubilden. Für die Prüfung wird ebenfalls eine Infrarot-Kamera eingesetzt.

Aus WO 2004/020993 A2 ist es bekannt mit einem Wandler ein Schallsignal in eine Struktur einzukoppeln. Dadurch soll ein akustisches Chaos in der Struktur erreicht werden.

Es ist daher Aufgabe der Erfindung Möglichkeiten zu, schaffen, mit denen kostengünstig eine zerstörungsfreie Prüfung von Werkstücken erreichbar ist.

Erfindungsgemäß wird diese Aufgabe mit einer Vorrichtung, die die Merkmale des Anspruchs 1 aufweist und mit einem Verfahren nach Anspruch 8 gelöst.

Vorteilhafte Ausgestaltungsformen und Weiterbildungen der Erfindung können mit den in den untergeordneten Ansprüchen bezeichneten Merkmalen erreicht werden.

Erfindungsgemäß werden dabei die Vorteile einer Ultraschallprüfung in Kombination mit einer thermographischen Auswertung ausgenutzt.

Dabei wird das jeweilige Werkstück an mindestens einer Seite fest eingespannt, wobei die Einspannung auch an mehreren Positionen realisiert sein kann.

In einem Abstand zur Einspannung greifen dann Aktuatorelemente an das Werkstück an, mit denen Schwingungen im Frequenzbereich des Ultraschalls in das jeweilige Werkstück eingekoppelt und dieses dann je nach Betrieb der Aktuatorelemente in Biege- oder Torsionsschwingungen versetzt wird.

Hierzu greifen an das Werkstück wenigstens zwei sich diametral gegenüberliegend angeordnete Akutatorelemente an das Werkstück an, wobei mit einem solchen Paar von Aktuatorelementen zumindest Biegeschwingungen des Werkstückes erreichbar sind. Hierzu werden dann die Aktuatorelemente an einer Seite des Werkstückes gegenläufig zu den Aktuatorelementen an der anderen Seite des Werkstückes betrieben, so dass eine entsprechende Kraftwirkung mit wechselnder um 180° versetzter Auslenkungsbewegung des Werkstückes erreichbar ist.

Eine solche Ausführungsform eignet sich insbesondere für Werkstücke, die eine große Länge in Bezug zu ihrer Breite und Höhe haben, wie dies häufig bei Trägern, Hebelarmen oder Profilen der Fall ist.

Großformatigere Werkstücke, wie beispielsweise plattenförmige Elemente können ebenfalls mit der Erfindung auf Fehler oder Fehlstellen geprüft werden.

Hierzu ist es häufig günstig mehrere feste Einspannungen am zu prüfenden Werkstück einzusetzen und dann für die Anregung von Schwingungen mindestens zwei Paare von Aktuatorelementen, wie vorab beschrieben, an das Werkstück angreifen zu lassen.

In jedem Fall sollten dann die Aktuatorelemente zeitlich synchron betrieben werden, wobei dies für eine gleichphasige Anregung von Schwingungen des Werkstückes auch auf die von den jeweiligen Aktuatorelementen ausgeübte Kraftrichtung zutrifft.

Sollen Torsionsschwingungen des Werkstückes angeregt werden, sollte der Zeitsynchronbezug beibehalten, jedoch die Paare von Aktuatorelementen mit gegenläufiger Kraftwirkungsrichtung betrieben werden.
Im Falle von gleichen Aktuatorelementen kann dies durch einfache entgegengesetzte Polung der Aktuatorelemente, für den Fall dass diese mittels Piezoaktuatoren, die bevorzugt in Stapelform eingesetzt sind, erreicht werden.

Die Aktuatorelemente sollten ebenfalls mittels Einspannungen zur Aufnahme von Reaktionskräften und der Sicherung einer Vorspannung in einer Einspannung gehalten sein. Eine solche Einspannung kann beispielsweise als ein in U-Form ausgebildetes Joch zur Verfügung gestellt sein.

Am entsprechend schwingenden Werkstück oder auch im Nachgang dazu kann dann mit mindestens einem Temperatursensor, bevorzugt einem berührungslos messenden Temperatursensor die Oberflächentemperatur des Werkstückes ortsaufgelöst bestimmt werden.

Werden dabei werkstückspezifisch vorgebbare Schwellwerte von Temperaturdifferenzen, insbesondere eine lokale Erwärmung detektiert, können Aussagen zu einem Fehler oder einer Fehlstelle am Werkstück getroffen werden, wobei diese nicht nur die jeweilige Position vom Fehler bzw. Fehlstelle sondern auch von Art und Größe des jeweiligen Fehlers bzw. der Fehlstelle betreffen.

Je nach eingesetzten Temperatursensor kann eine Detektion am gesamten Werkstück durchgeführt werden.

Es besteht aber auch die Möglichkeit Werkstück und Temperatursensor relativ zueinander zu bewegen und dadurch die ortsaufgelöste Temperaturmessung durchzuführen.

Die Aktuatorelemente können mit einer konstanten Frequenz im Frequenzbereich des Ultraschalls betrieben werden, die bevorzugt auf das jeweilige Werkstück abgestimmt ist.

Insbesondere bei größeren Werkstücken kann es aber vorteilhaft sein, die Prüfung bei unterschiedlichen Frequenzen, mit denen die Aktuatorelemente betrieben werden, durchzuführen. So kann beispielsweise innerhalb eines Frequenzintervalls ein entsprechend abgestufter Betrieb der Aktuatorelemente mit mehreren konstanten Frequenzstufen sukzessive durchgeführt werden.

Es besteht aber auch die Möglichkeit ein entsprechendes Frequenzintervall während der Prüfung zu durchfahren.

Durch die unterschiedlichen Frequenzen verschieben sich wegen der sich entsprechend ändernden Wellenlängen auch die Positionen von Knoten einer angeregten Schwingung des Werkstückes, so dass daraus resultierende Fehler bei der zerstörungsfreien Werkstoffprüfung vermieden werden können.

Die Aktuatorelemente sollten mit Frequenzen im Bereich von 2 bis 200 kHZ betrieben werden.

Nachfolgend soll die Erfindung näher beschrieben werden.

Dabei zeigen:
- Figur 1: ein Beispiel einer Anordnung eines Werkstückes mit fester Einspannung und am Werkstück angreifenden Aktuatorelementen in einer per-
- Figur 2: spektivischen schematischen Darstellung; eine schematische Darstellung für eine gleichphasige Anregung, um Biegeschwingungen am Werkstück anzuregen
und
- Figur 3: eine schematische Darstellung für eine gegenphasige Anregung, um Torsionsschwingungen des Werkstückes anzuregen.

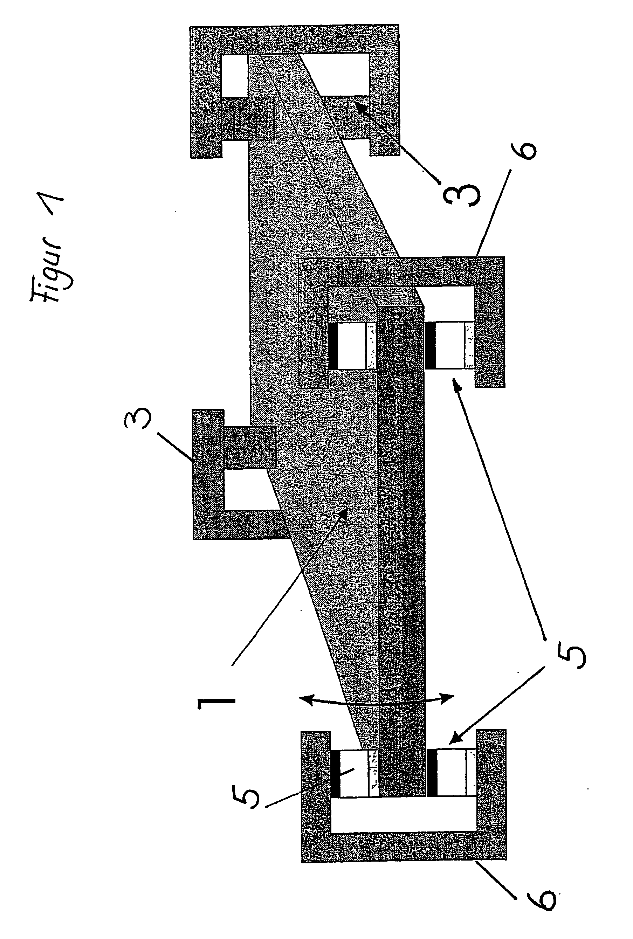

Dabei wurde in den Figuren 1 bis 3 auf die Darstellung von mindestens einem erfindungsgemäß erforderlichen Temperatursensor verzichtet.

In Figur ist ein plattenförmiges Werkstück 1 gezeigt. Das Werkstück 1 ist im Bereich einer Stirnseite mit zwei festen Einspannungen 3 fixiert gehalten.

An der gegenüberliegenden Stirnseite des Werkstückes 1, also in einem entsprechenden Abstand zu den Einspannungen 3, greifen zwei Paare von Aktuatorelementen 5, die jeweils in einer eigenen Einspannung 6 zum Werkstück 1 vorgespannt fixiert gehalten sind, an.

Die Aktuatorelemente 5 sind dabei aus gestapelten Piezoelementen gebildet und jeweils ein Aktuatorelement 5 eines Paares diametral zum jeweils anderen Aktuatorelement 5 am Werkstück angeordnet.

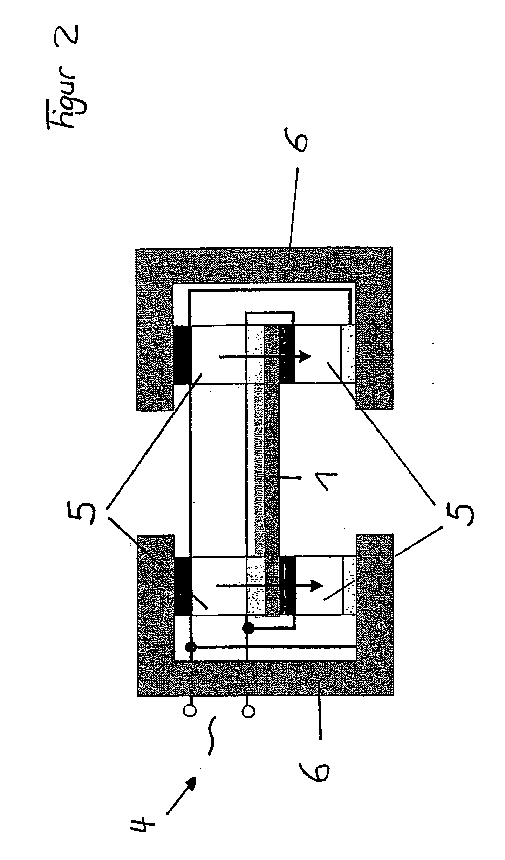

Mit Figur 2 soll verdeutlicht werden, wie eine Biegeschwingung des Werkstückes 1 bei entsprechendem Betrieb der Aktuatorelemente 5 erreicht werden kann.

Dabei werden die Paare von Aktuatorelementen 5 vollständig synchron betrieben, was sowohl auf die jeweilige Zeit wie auch auf die Bewegungsrichtung der Aktuatorelemente 5 zutrifft.
So werden der jeweils oberen und die jeweils unteren Aktuatorelemente 5 gleichzeitig angesteuert, so dass sie sich an der Oberseite ausdehnen und an der Unterseite zusammenziehen und nachfolgen die Aktuatorelemente sich an der Unterseite ausdehnen und gleichzeitig hierzu die Aktuatorelemente 5 an der Oberseite sich zusammenziehen. Dabei sollten bevorzugt an den Paaren von Aktuatorelementen 5 jeweils gleiche Wege zurückgelegt werden können.

Bei einem solchen Betrieb wird das Werkstück 1 zu Biegeschwingungen angeregt, wie dies mit dem Doppelpfeil in Figur 1 dargestellt ist.

Durch die so in das Werkstück 1 eingebrachte Energie kommt es zu einer Erwärmung, die durch Fehler oder Fehlstellen lokal differenziert ausfallen kann, was dann mittels mindestens eines Temperatursensors berührungslos detektiert werden kann.

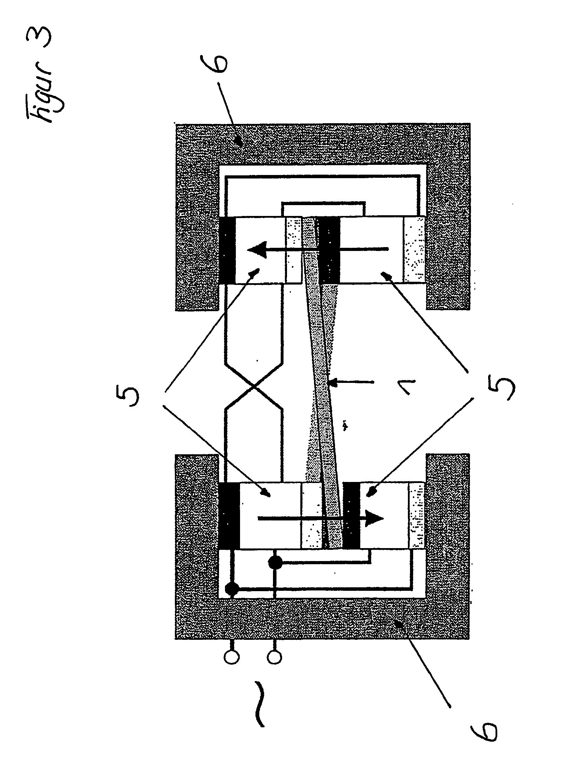

Mit Figur 3 soll eine gegenphasige Anregung von Schwingungen durch die Paare von Aktuatorelementen 5 verdeutlicht werden.

Dabei sind die Aktuatorelemente 5 der beiden Paare jeweils an einer elektrischen Spannungsversorgung 4 gegenläufig gepolt, so dass zeitgleich eine gegenläufige Kraftwirkung und entsprechende Bewegung am Werkstück 1 erreicht werden kann, was zur Anregung von Torsionsschwingungen des Werkstückes 1 führt.

Dadurch ist bei gleichem Aufbau für erfindungsgemäße Vorrichtungen möglich, Werkstücke 1 zu Biege- oder Torsionsschwingungen anzuregen, wobei dabei die jeweilige Dimensionierung und geometrische Gestalt des Werkstückes bei der zerstörungsfreien Prüfung berücksichtigt werden kann.
Selbstverständlich besteht aber auch die Möglichkeit, wie bereits für einen Betrieb bei unterschiedlichen Frequenzen angesprochen, auch eine zeitversetzte Anregung von Biege- und Torsionsschwingungen am selben Werkstück 1 vorzusehen, wobei dann insbesondere die Wärmekapazität und Wärmeleitfähigkeit berücksichtigt werden sollte, um hierdurch hervorgerufene Fehler vermeiden zu können.

## Patentansprüche

1. Vorrichtung für die zerstörungsfreie thermografische Prüfung von Werkstücken mit mindestens einem Temperatursensor,
**dadurch gekennzeichnet, dass**
die Vorrichtung dazu eingerichtet ist, ein Werkstück (1) an mindestens einer Seite fest einzuspannen und in einem Abstand zur Einspannung (3) mit mindestens zwei an gegenüberliegenden Seiten des Werkstücks (1) angeordneten, Schwingungen im Frequenzbereich des Ultraschalls in das Werkstück (1) einkoppelnden und Biege- oder Torsionsschwingungen initierende Aktuator-elementen (5) am Werkstück (1) anzugreifen.

2. Vorrichtung nach Anspruch 1, **dadurch gekennzeichnet, dass** die Aktuatorelemente (5) gegen das Werkstück (1) mit einer Einspannung (3) vorgespannt gehalten sind.

3. Vorrichtung nach Anspruch 1 oder 2, **dadurch gekennzeichnet, dass** die Aktuatorelemente (5) mit gestapelten Piezoaktuatoren gebildet sind.

4. Vorrichtung nach einem der vorhergehenden Ansprüche, **dadurch gekennzeichnet, dass** die Aktuatorelemente (5) mit vorgebbarer Frequenz oder innerhalb eines vorgebbaren Frequenzintervalls betreibbar sind.

5. Vorrichtung nach einem der vorhergehenden Ansprüche, **dadurch gekennzeichnet, dass** zwei Paare von Aktuatorelementen (5) gleichphasig oder gegenphasig betreibbar sind.

6. Vorrichtung nach einem der vorhergehenden Ansprüche, **dadurch gekennzeichnet, dass** der Temperatursensor die Werkstücktemperatur an einer Oberfläche ortsaufgelöst erfasst.

7. Vorrichtung nach einem der vorhergehenden Ansprüche, **dadurch gekennzeichnet, dass** Temperatursensor und Werkstück (1) relativ zueinander bewegbar sind.

8. Verfahren für die zerstörungsfreie thermografische Werkstoffprüfung, bei dem am schwingenden Werkstück (1) die Oberflächentemperatur ortsaufgelöst mit mindestens einem Temperatursensor bestimmt wird,
**dadurch gekennzeichnet, dass** an einem mindestens einseitig fest eingespannten Werkstück (1) mittels in einem Abstand zur Einspannung (3) an gegenüberliegenden Seiten des Werkstücks (1) angeordneten Aktuatorelementen (5) Biege- oder Torsionsschwingungen im Frequenzbereich des Ultraschalls initiiert werden.

9. Verfahren nach Anspruch 8, **dadurch gekennzeichnet, dass** mit in einem Abstand zueinander angeordneten Paaren von Aktuatorelementen (5), die jeweils diamatral zueinander angeordnet sind und am Werkstück (1) angreifen, bei gleichphasiger Schwingungsanregung Biegeschwingungen und bei gegenphasiger Anregung Torsionsschwingungen des Werkstückes (1) initiiert werden.

10. Verfahren nach Anspruch 8 oder 9, **dadurch gekennzeichnet, dass** die Aktuatorelemente (5) im Frequenzbereich von 2 bis 200 kHz betrieben werden.

11. verfahren nach Anspruch 10, **dadurch gekennzeichnet, dass** die Aktuatorelemente (5) mit konstanter Frequenz betrieben werden.

12. Verfahren nach Anspruch 10, **dadurch gekennzeichnet, dass** die Aktuatorelmenete (5) innerhalb eines Frequenzintervalls in vorgebbarer Frequenzstufung betrieben werden oder das Frequenzinterval sukzessive durchfahren wird.

13. Verfahren nach einem der Ansprüche 8 bis 12, **dadurch gekennzeichnet, dass** ein Fehler im Werkstück (1) detektiert wird, wenn lokal ein vorgebbarer Schwellwert einer Temperaturdifferenz am Werkstück (1) bestimmt worden ist.

## Claims

1. A device for the non-destructive thermographic testing of workpieces with at least one temperature sensor, **characterised in that** the device is set up to clamp a workpiece (1) securely on at least one side, and at a distance from the clamping means (3) to act on the workpiece (1) with at least two actuator elements (5) which are arranged on opposing sides of the workpiece (1) and which couple vibrations in the frequency range of ultrasound into the workpiece (1) and initiate flexural or torsional vibrations.

2. A device according to Claim 1, **characterised in that** the actuator elements (5) are held under initial tension against the workpiece (1) with a clamping means (3).

3. A device according to Claim 1 or 2, **characterised in that** the actuator elements (5) are formed with stacked piezoactuators.

4. A device according to one of the preceding claims, **characterised in that** the actuator elements (5) can be operated with a pre-settable frequency or within a pre-settable frequency interval.

5. A device according to one of the preceding claims, **characterised in that** two pairs of actuator elements (5) can be operated in equiphase or in antiphase.

6. A device according to one of the preceding claims, **characterised in that** the temperature sensor detects the workpiece temperature on a surface in spatially resolved manner.

7. A device according to one of the preceding claims, **characterised in that** the temperature sensor and workpiece (1) are movable relative to one another.

8. A method for non-destructive thermographic materials testing, in which the surface temperature is determined in spatially resolved manner on the vibrating workpiece (1) with at least one temperature sensor,
**characterised in that** flexural or torsional vibrations in the frequency range of ultrasound are initiated on a workpiece (1) which is clamped securely on at least one side by means of actuator elements (5) which are arranged at a distance from the clamping means (3) on opposing sides of the workpiece (1).

9. A method according to Claim 8, **characterised in that** with pairs of actuator elements (5) which are arranged at a distance from each other, which are in each case arranged diametrally to one another and act on the workpiece (1), with equiphase vibration stimulation flexural vibrations, and with antiphase stimulation torsional vibrations, of the workpiece (1) are initiated.

10. A method according to Claim 8 or 9, **characterised in that** the actuator elements (5) are operated in a frequency range from 2 to 200 kHz.

11. A method according to Claim 10, **characterised in that** the actuator elements (5) are operated with a constant frequency.

12. A method according to Claim 10, **characterised in that** the actuator elements (5) are operated within a frequency interval in pre-settable frequency steps or the frequency interval is traversed in succession.

13. A method according to one of Claims 8 to 12, **characterised in that** a fault in the workpiece (1) is detected if locally a pre-settable threshold value of a temperature difference has been determined on the workpiece (1).

## Revendications

1. Dispositif de contrôle thermographique non destructif de pièces, comprenant au moins un capteur de température, **caractérisé en ce que** le dispositif est aménagé de manière à ce qu'une pièce d'usinage soit solidement serrée (1) sur au moins un côté et à ce que, à une distance du serrage, la pièce d'usinage (1) soit saisie par au moins deux éléments d'actionnement se situant sur des côtés opposés à la pièce d'usinage (1), injectant dans la pièce d'usinage (1) des oscillations dans la plage de fréquences des ultrasons et initiant des oscillations de flexion ou de torsion.

2. Dispositif selon la revendication 1, **caractérisé en ce que** les éléments d'actionnement (5) sont maintenus pré-serrés contre la pièce d'usinage (1) avec un certain serrage (3).

3. Dispositif selon la revendication 1 ou 2, **caractérisé en ce que** les éléments d'actionnement (5) sont formés avec des actionneurs piézoélectriques empilés.

4. Dispositif selon l'une quelconque des revendications précédentes, **caractérisé en ce que** les éléments d'actionnement (5) peuvent être actionnés avec une fréquence prédéterminable ou dans un intervalle de fréquences prédéterminable.

5. Dispositif selon l'une quelconque des revendications précédentes, **caractérisé en ce que** deux paires d'éléments d'actionnement (5) peuvent être actionnées en équilibre de phase ou en opposition de phase.

6. Dispositif selon l'une quelconque des revendications précédentes, **caractérisé en ce que** le capteur de température détecte en résolution spatiale la température de la pièce d'usinage à une surface.

7. Dispositif selon l'une quelconque des revendications précédentes, **caractérisé en ce que** le capteur de température et la pièce d'usinage (1) peuvent être déplacés l'un par rapport à l'autre.

8. Procédé de contrôle thermographique non destructif d'un matériau, par lequel la température de surface sur la pièce d'usinage (1) oscillante est établie en résolution spatiale avec au moins un capteur de température,
**caractérisé en ce que** des oscillations de flexion ou de torsion sont initiées, dans la plage de fréquences des ultrasons, sur une pièce d'usinage (1) solidement serrée au moins d'un côté, au moyen d'éléments d'actionnement (5) agencés à une distance du serrage (3) sur des côtés opposés de la pièce d'usinage (1).

9. Procédé selon la revendication 8, **caractérisé en ce que**, au moyen de paires d'éléments d'actionnement (5) agencées à une distance les unes des autres, lesquelles sont respectivement agencées diamétralement les unes par rapport aux autres et saisissent la pièce d'usinage (1), sont initiées des oscillations de flexion de la pièce d'usinage (1) lors de l'excitation d'oscillations en équilibre de phase et des oscillations de torsion de la pièce d'usinage (1) lors de l'excitation d'oscillations en opposition de phase.

10. Procédé selon la revendication 8 ou 9, **caractérisé en ce que** les éléments d'actionnement (5) sont actionnés dans la plage de fréquences de 2 à 200 kHz.

11. Procédé selon la revendication 10, **caractérisé en ce que** les éléments d'actionnement (5) sont actionnés avec une fréquence constante.

12. Procédé selon la revendication 10, **caractérisé en ce que** les éléments d'actionnement (5) sont actionnés dans un intervalle de fréquence à gradation de fréquence prédéterminable ou l'intervalle de fréquence est parcouru successivement.

13. Procédé selon l'une quelconque des revendications 8 à 12, **caractérisé en ce que** l'on détecte un défaut dans la pièce d'usinage (1) lorsqu'on a déterminé localement sur la pièce d'usinage (1) un seuil prédéterminable d'une différence de température.
